Europäisches Patentamt

European Patent Office

Office européen des brevets

(19)

(11) Veröffentlichungsnummer: **0 110 192
B1**

# (12) EUROPÄISCHE PATENTSCHRIFT

(45) Veröffentlichungstag der Patentschrift:
27.01.88

(51) Int. Cl.⁴: **G 01 B 3/22**

(21) Anmeldenummer: **83111042.4**

(22) Anmeldetag: **04.11.83**

(54) Messtaster.

(30) Priorität: **05.11.82 DE 8231029 U**

(73) Patentinhaber: **TRAUB Aktiengesellschaft, Ulmer
Strasse 49-55, D-7313 Reichenbach/Fils (DE)**

(43) Veröffentlichungstag der Anmeldung:
**13.06.84 Patentblatt 84/24**

(72) Erfinder: **Wiesner, Franz, Hopfenweg 5,
D-7311 Owen/Teck (DE)**

(45) Bekanntmachung des Hinweises auf die Patenterteilung:
**27.01.88 Patentblatt 88/4**

(74) Vertreter: **Wuesthoff, Franz, Dr.-ing. et al, Patentanwälte
Wuesthoff -v. Pechmann-Behrens-Goetz
Schweigerstrasse 2, D-8000 München 90 (DE)**

(84) Benannte Vertragsstaaten:
**AT BE CH DE FR GB IT LI SE**

(56) Entgegenhaltungen:
**DE - A - 2 509 899
DE - A - 2 840 934
DE - B - 2 757 453
FR - A - 1 062 355
US - A - 3 832 784
US - A - 4 158 919**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft einen Messtaster mit
- einem Gehäuse, an dem ein ringförmiger Stützkörper befestigt ist,
- einem Taststiftträger, der sich über eine rings um eine zentrale Längsachse angeordnete Lagerung am Stützkörper abstützt und zur Befestigung mindestens eines Taststifts ausgebildet ist,
- und einer Federung, die bestrebt ist, den Taststiftträger in einer Ruhestellung zu halten, in der er sich über die gesamte Lagerung am Stützkörper abstützt, jedoch bei Einwirkung einer äusseren Kraft auf den Taststift ein Kippen des Taststiftträgers um eine quer zur Richtung dieser Kraft und zur Längsachse verlaufende Querachse sowie eine durch das Kippen bedingte Signalabgabe ermöglicht, wobei
- die Federung eine im wesentlichen normal zur Längsachse angeordnete, elastische Scheibe aufweist, in deren Mitte der Taststiftträger befestigt ist, und die mit ihrem äusseren Rand am Stützkörper befestigt ist,
- und dem Taststiftträger mindestens ein von der Lagerung getrennter elektrischer Schalter für die Signalabgabe zugeordnet ist.

Bei einem aus der DE-A-2 840 934 bekannten Messtaster dieser Gattung ist der Stützkörper als Gehäusedeckel mit einer verhältnismässig kleinen mittigen Aussparung ausgebildet. In der Aussparung ist eine membranartige elastische Scheibe mit ihrem äusseren Rand zwischen einer Ringschulter des Stützkörpers und einem in dessen Aussparung befestigten Ring eingespannt. Der radial innere Rand der elastischen Scheibe ist zwischen einem den Taststift tragenden, axial äusseren Teil und einem mit der Lagerung starr verbundenen axial inneren Teil des Taststiftträgers eingespannt. Der Aussendurchmesser der elastischen Scheibe ist nur knapp halb so gross wie der Durchmesser der Lagerung. Der als Stützkörper dienende Gehäusedeckel ist mit seinem äusseren Rand unabhängig von der Membran am Gehäuse befestigt. Wenn das Innere des Gehäuses gegen Eindringen von Schmutz geschützt werden soll, muss also an zwei voneinander getrennten ringförmigen Bereichen, am äusseren und am inneren Rand des Stützkörpers, mit voneinander unabhängigen Mitteln für eine dichte Befestigung gesorgt werden. Dabei muss berücksichtigt werden, dass wegen der sehr unterschiedlichen Durchmesser der Lagerung und der elastischen Scheibe und wegen der damit zusammenhängenden grossen radialen Breite des als Stützkörper dienenden Gehäusedeckels unterschiedliche Wärmedehnungen der Lagerung einerseits und des Stützkörpers samt Membran andererseits zu erwarten sind.

Der Erfindung liegt die Aufgabe zugrunde, einen Messtaster derart weiterzubilden, dass er während einer langen Lebensdauer genaue und reproduzierbare Messergebnisse liefert.

Diese Aufgabe ist bei einem Messtaster der eingangs beschriebenen Gattung erfindungsgemäss dadurch gelöst, dass der Stützkörper ein in das Gehäuse eingesetzter Ring ist, der zusammen mit dem äusseren Rand der elastischen Scheibe zwischen einer ringförmigen Innenschulter des Gehäuses und einem am Gehäuse befestigten Flansch derart eingespannt ist, dass die elastische Scheibe einen Raum des Gehäuses, der neben der Lagerung und Teilen des bzw. jedes Schalters auch den Stützkörper enthält, dicht nach aussen abschliesst.

Damit wird erreicht, dass die radial äussere Einspannung der elastischen Scheibe mit der Befestigung des Stützkörpers eine Einheit bildet, sodass schädliche Einflüsse von Wärmedehnungen auf die Dichtheit des Gehäuses nicht zu befürchten sind. Dies umso weniger, weil der Stützkörper als schmaler Ring ausgeführt werden kann, da er selber keinerlei Abdeckfunktion mehr hat. Der Stützkörper kann beispielsweise aus gehärtetem Stahl bestehen, während das Gehäuse aus weicherem Werkstoff besteht, und es ist auch möglich, den Stützkörper auszuwechseln, wenn sich Abnutzungserscheinungen bemerkbar machen.

Mit der Erfindung wird ferner erreicht, dass der Taststiftträger durch die im Durchmesser verhältnismässig grosse elastische Scheibe stets ausreichend geführt ist, auch bei grossen Auslenkungen, beispielsweise wenn der Taststiftträger infolge axialer Belastung des Taststifts nicht mehr über die Lagerung am Stützkörper abgestützt ist. Selbst solche im allgemeinen ungewollt grossen Auslenkungen gefährden die elastische Scheibe wegen deren Grösse weniger als bei dem bekannten Messtaster; auch von daher ist die Gefahr, dass sich Messungenauigkeiten einschleichen, durch die erfindungsgemässen Merkmale vermindert.

Der erfindungsgemässe Messtaster eignet sich besonders zum Erfassen von Werkstück- oder Werkzeugmassen an Werkzeugmaschinen mit Steuerung des Arbeitsablaufs und der Arbeitswege durch einen Rechner (NC- oder CNC-Steuerung). Der Messtaster unterbricht beim Antasten der Werkstück- oder Werkzeugoberfläche nach einer kleinen Auslenkung des Taststifts einen Stromkreis und gibt somit ein Schaltsignal ab, das durch den Steuerungsrechner ausgewertet wird, wobei über Wegmesssysteme der zugehörigen Werkzeug- oder Prüfmaschine beispielsweise eine Werkstück- oder Werkzeugposition errechnet werden kann.

Es ist vorteilhaft, wenn der Einspanndurchmesser des äusseren Randes der elastischen Scheibe grösser als der Durchmesser der Lagerung des Taststiftträgers ist.

Dabei hat der Stützkörper vorzugsweise ein L-förmiges Querschnittsprofil, das sich zusammensetzt aus einem vom Gehäuse weg radial nach innen ragenden Schenkel, an dem die Lagerung abgestützt ist, und einem von der Lagerung axial wegragenden Schenkel, der zusammen mit dem Flansch den äusseren Rand der Scheibe eingespannt hält.

Die Lagerung kann ein ununterbrochener Kreisring sein, sie kann aber auch aus mehreren in gleichmässigen Winkelabständen rings um die zentrale Längsachse angeordneten Lagerpunkten oder einzelnen Schneiden bestehen.

Weiterhin ist die Erfindung vorzugsweise dadurch ausgestaltet,

– dass die Lagerung zwischen der elastischen Scheibe und einem Boden des Gehäuses angeordnet ist,

– dass der mindestens eine Schalter an dem Boden befestigt ist und

– dass das Gehäuse mit seinem Boden in einen Halter eingesetzt ist.

Dabei ist es zweckmässig, wenn der mindestens eine Schalter mittels Feingewinde in Richtung der Längsachse einstellbar ist.

Aus der FR-A-1 062 355 ist ein Messtaster bekannt, bei dem ein Gehäuse mit einer in ihm axial verschiebbaren Tasterstange durch eine Membran verbunden ist, deren äusserer Rand unmittelbar an einer Innenschulter des Gehäuses eingespannt ist. Eine Lagerung und ein mit dieser zusammenwirkender Stützkörper im Sinne der eingangs beschriebenen Gattung ist jedoch nicht vorhanden.

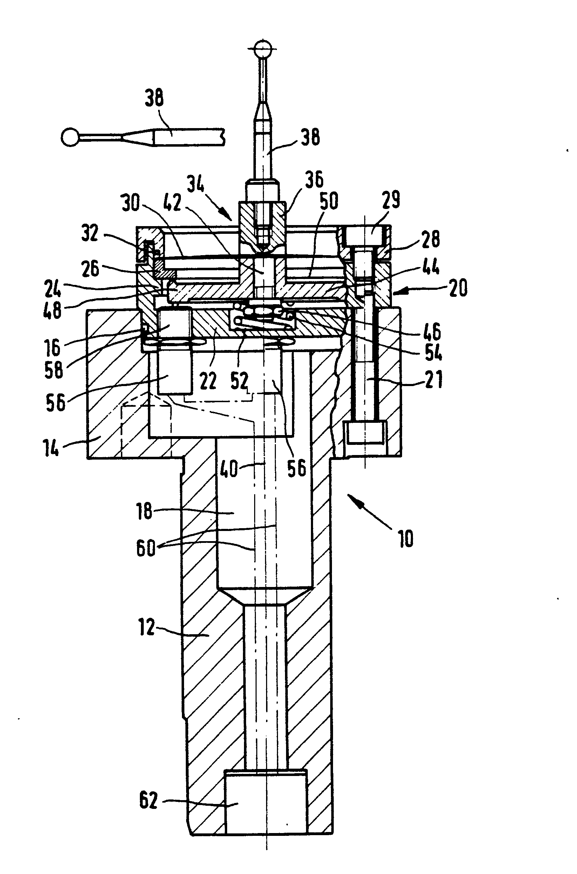

Ferner ist in der DE-A-2 509 899 ein Messtaster dargestellt und beschrieben, bei dem ein rohrförmiges Tastglied mittels einer membranartigen Blattfeder an einem Gehäuseteil gelagert ist. Die Blattfeder ist mit ihrem inneren Rand am rohrförmigen Tastglied und mit ihrem äusseren Rand am Gehäuseteil befestigt, indem sie jeweils zwischen Ringen gehalten ist. Das rohrförmige Tastglied stützt sich jedoch nicht an einem Stützglied ab, das vergleichbar mit dem erfindungsgemässen Stützkörper am Gehäuse befestigt ist. Die in Fig. 5 der DE-A-2 509 899 dargestellte, von einer Feder belastete Kreisringscheibe ist nicht gehäusefest und dient nur der axialen Rückstellung des Tastgliedes. Das Tastglied kann sich in bezug auf die Kreisringscheibe zwar schrägstellen, indem sie mit einer an ihr ausgebildeten Ringkante an einer kegelförmigen Rückstellfläche der Kreisringscheibe entlang gleitet; ein definiertes Kippen des Tastgliedes im Sinne der erfindungsgemäss vorausgesetzten Gattung ist jedoch nicht möglich.

Ein Ausführungsbeispiel der Erfindung wird im folgenden anhand einer schematischen Zeichnung näher erläutert. Die Zeichnung zeigt einen erfindungsgemässen Messtaster in einem axialen Längsschnitt.

Der dargestellte Messtaster hat einen im wesentlichen rohrförmigen Halter 10 mit einem Schaft 12, an dem er sich beispielsweise in einen Schlitten einer Bearbeitungs- oder Messmaschine einspannen lässt, und mit einem Kopf 14, der eine zylindrische Ausnehmung 16 sowie eine sich von dort aus durch den gesamten Schaft 12 hindurcherstreckende, abgestufte Bohrung 18 aufweist.

In die Ausnehmung 16 ist ein topfförmiges Gehäuse 20 eingesetzt, das mit Schrauben 21 am Kopf 14 befestigt ist und einen Boden 22 sowie eine im Abstand darüber angeordnete ringförmige Innenschulter 24 aufweist. Auf der Innenschulter 24 ruht ein in das Gehäuse 20 eingesetzter ringförmiger Stützkörper 26 aus gehärtetem Stahl.

Darüber ist ein Flansch 28 am Gehäuse 20 mit Schrauben 29 befestigt.

Zwischen dem Stützkörper 26 und dem Flansch 28 ist eine membranartige, ringförmige elastische Scheibe 30 mit ihrem äusseren Rand eingespannt. Dieser äussere Rand ist in Dichtungsmaterial 32 eingebettet und die elastische Scheibe 30 ist insgesamt dicht, so dass sie den unter ihr angeordneten Innenraum des Gehäuses 20 hermetisch abschliesst. Im dargestellten Beispiel besteht die elastische Scheibe 30 aus Federstahlblech von 0,1 mm Dicke.

An der elastischen Scheibe 30 ist in deren Mitte ein Taststiftträger 34 befestigt. Zum Taststiftträger 34 gehört ein zylindrisches Aussenteil 36, an dem ein Taststift 38 befestigt ist. Im dargestellten Beispiel stimmt die Achse des Taststifts 38 mit der im folgenden als zentrale Längsachse 40 bezeichneten Achse des gesamten Taststiftträgers 34 überein. Zusätzlich oder alternativ kann am Taststiftträger 34 mindestens ein Taststift 38 befestigt sein, dessen Achse eine andere Richtung hat, beispielsweise mit der zentralen Längsachse 40 einen rechten Winkel einschliesst.

Das Aussenteil 36 des Taststiftträgers 34 hat einen Gewindezapfen 42, der sich axial durch ein mittiges Loch der Scheibe 30 hindurcherstreckt und ein im wesentlichen scheibenförmiges Innenteil 44 trägt, das ebenfalls zum Taststiftträger 34 gehört und mittels einer Mutter 46 derart befestigt ist, dass der mittlere Teil der elastischen Scheibe 30 zwischen Aussenteil 36 und Innenteil 44 dicht und fest eingespannt ist.

Das scheibenförmige Innenteil 44 hat einen kreisringförmigen äusseren Rand 48, an dem eine Lagerung 50 ausgebildet ist. Die Lagerung kann die Form einer kreisringförmigen Schneide haben oder aus mehreren, beispielsweise sechs, in gleichmässigen Abständen rings um die zentrale Längsachse 40 angeordneten kegelförmigen Lagerstellen oder prismenförmigen Lagerschneiden bestehen. In jedem Fall liegt die Lagerung 50 in der abgebildeten Ruhestellung des Taststiftträgers 34 mit einer definierten Vorspannung an einer ebenen Ringfläche an der Unterseite des Stützkörpers 26 an.

Der Boden 22 des Gehäuses 20 hat eine mittige Ausdrehung 52, in der das eine Ende einer zusätzlichen Feder 54 aufgenommen ist. Diese Feder 54, im dargestellten Beispiel eine zylindrische Schraubenfeder, drückt mit einer vorbestimmten axialen Kraft von unten her gegen das Innenteil 44 und ist im dargestellten Beispiel allein dafür verantwortlich, dass die Lagerung 50 in der Ruhestellung des Taststiftträgers 34 am Stützkörper 26 anliegt. Die elastische Scheibe 30 für sich alleine würde bewirken, dass die Lagerung 50 von der ebenen Unterseite des Stützkörpers 26 einen Abstand von beispielsweise 0,6 mm hat. Die zusätzliche Feder 54 ist jedoch so kräftig bemessen, dass sie die elastische Scheibe 30 um den genannten Betrag von beispielsweise 0,6 mm nach oben hin auswölbt; die elastische Scheibe 30 hat infolgedessen in der Ruhestellung des Taststiftträgers 34 die in der Zeichnung angedeutete Form eines flachen Kegelstumpfes.

Gegen den Widerstand der elastischen Scheibe 30 und der zusätzlichen Feder 54 lässt sich der Taststift 38 und mit ihm der Taststiftträger 34 in jeder beliebigen zur Längsachse 40 normalen Richtung auslenken. Ausserdem lässt sich der Taststift 38 samt Taststiftträger 34 gegen den Widerstand der Feder 54 in Richtung der Längsachse zum Innenraum des Gehäuses 20 hin verschieben; diese Verschiebung wird in einem Anfangsstadium, solange die Scheibe 30 nach oben gewölbt ist, von dieser unterstützt. Ist die axiale Verschiebung jedoch so gross, dass die Scheibe 30 sich nach innen, bei der dargestellten Anordnung also nach unten durchwölbt, so erzeugt auch die Scheibe eine axiale Gegenkraft.

Am Boden 22 des Gehäuses 20 sind zwei elektrische Schalter 56 in bezug auf die Längsachse 40 einander diametral gegenüber angeordnet. Einer der Schalter 56 ist in der Zeichnung der Deutlichkeit halber gegenüber seiner tatsächlichen Lage um 90° versetzt dargestellt. Wenn Auslenkungen des Taststifts 38 in mehreren zur Längsachse 40 normalen Richtungen festgestellt werden sollen, sind am Boden 22 vorzugsweise vier Schalter 56 um je 90° gegeneinander versetzt angeordnet.

Jeder der Schalter 56 hat ein Feingewinde 58, mit dem er einstellbar in den Boden 22 eingeschraubt ist. Von den Schaltern 56 führen Leitungen 60 in einen Anschlussraum 62 am Ende des Schaftes 12. Dort kann beispielsweise ein Stecker, eine Induktionsspule od. dgl. angeordnet sein, um die Schalter 56 mit weiterführenden Leitungen an der zugehörigen Bearbeitungs- oder Prüfmaschine zu verbinden.

Falls die Lagerung 50 aus einzelnen Lagerstellen oder -schneiden besteht, ist jeder der Schalter 56 vorzugsweise genau diametral gegenüber einer dieser Lagerstellen oder -schneiden angeordnet.

**Patentansprüche**

1. Messtaster mit
– einem Gehäuse (20), an dem ein ringförmiger Stützkörper (26) befestigt ist,
– einem Taststiftträger (34), der sich über eine rings um eine zentrale Längsachse (40) angeordnete Lagerung (50) am Stützkörper (26) abstützt und zur Befestigung mindestens eines Taststifts (38) ausgebildet ist,
– und einer Federung (30, 54), die bestrebt ist, den Taststiftträger (34) in einer Ruhestellung zu halten, in der er sich über die gesamte Lagerung (50) am Stützkörper (26) abstützt, jedoch bei Einwirkung einer äusseren Kraft auf den Taststift (38) ein Kippen des Taststiftträgers (34) um eine quer zur Richtung dieser Kraft und zur Längsachse (40) verlaufende Querachse sowie eine durch das Kippen bedingte Signalabgabe ermöglicht, wobei
– die Federung (30, 54) eine im wesentlichen normal zur Längsachse (40) angeordnete, elastische Scheibe (30) aufweist, in deren Mitte der Taststiftträger (34) befestigt ist, und die mit ihrem äusseren Rand am Stützkörper (26) befestigt ist,

– und dem Taststiftträger (34) mindestens ein von der Lagerung (50) getrennter elektrischer Schalter (56) für die Signalabgabe zugeordnet ist, dadurch gekennzeichnet, dass der Stützkörper (26) ein in das Gehäuse (20) eingesetzter Ring ist, der zusammen mit dem äusseren Rand der elastischen Scheibe (30) zwischen einer ringförmigen Innenschulter (24) des Gehäuses (20) und einem am Gehäuse (20) befestigten Flansch (28) derart eingespannt ist, dass die elastische Scheibe (30) einen Raum des Gehäuses (20), der neben der Lagerung (50) und Teilen des bzw. jedes Schalters (56) auch den Stützkörper (26) enthält, dicht nach aussen abschliesst.

2. Messtaster nach Anspruch 1, dadurch gekennzeichnet, dass der Einspanndurchmesser des äusseren Randes der elastischen Scheibe (30) grösser als der Durchmesser der Lagerung (50) des Taststiftträgers (34) ist.

3. Messtaster nach Anspruch 2, dadurch gekennzeichnet, dass der Stützkörper (26) ein L-förmiges Querschnittsprofil aufweist, das sich zusammensetzt aus einem vom Gehäuse (20) weg radial nach innen ragenden Schenkel, an dem die Lagerung (50) abgestützt ist, und einem von der Lagerung (50) axial wegragenden Schenkel, der zusammen mit dem Flansch (28) den äusseren Rand der Scheibe (30) eingespannt hält.

4. Messtaster nach einem der Ansprüche 1 bis 3, dadurch gekennzeichnet,
– dass die Lagerung (50) zwischen der elastischen Scheibe (30) und einem Boden (22) des Gehäuses (20) angeordnet ist,
– dass der mindestens eine Schalter (56) an dem Boden (22) befestigt ist und
– dass das Gehäuse (20) mit seinem Boden (22) in einen Halter (10) eingesetzt ist.

5. Messtaster nach Anspruch 4, dadurch gekennzeichnet, dass der mindestens eine Schalter (56) mittels Feingewinde (58) in Richtung der Längsachse (40) einstellbar ist.

**Claims**

1. A sensor comprising
– a housing (20), having an annular support member (26) secured thereto,
– a sensor pin carrier (34) which rests upon the support member (26) via a bearing (50) extending all around a central longitudinal axis (40) and being designed for securing thereto at least one sensor pin (38),
– and spring means (30, 54) which tends to hold the sensor pin carrier (34) in an inoperative position in which the latter is resting on the support member (26) via the entire bearing (50), but permits the sensor pin carrier (34) to tilt, under the load of an external force on the sensor pin (38), about a transverse axis crossing the direction of said force and the longitudinal axis (40), and a signal to be delivered as a function of such tilting movement, wherein
– the spring means (30, 54) includes an elastic disc (30) which is fitted substantially perpendicularly to the longitudinal axis (40), has the sensor pin carrier (34) secured to its centre, and has its outer edge secured to the support member (26), and

– at least one electric signal delivering switch (56) which is separate from the bearing (50), is associated with the sensor pin carrier (34), characterized in that the support member (26) is a ring member placed into the housing (20), said ring member, together with the outer edge of the elastic disc (30), being clamped between a ringshaped internal shoulder (24) of the housing (20) and a flange (28) secured to the housing (20), such that the elastic disc (30) is sealingly closing, towards the exterior, a space of the housing (20) which, besides the bearing (50) and parts of the one, or of each, switch (56), contains also the support member (26).

2. The sensor of claim 1, characterized in that the clamping diameter of the outer edge of the elastic disc (30) is larger than the diameter of the bearing (50) of the sensor pin carrier (34).

3. The sensor of claim 2, characterized in that the support member (26) has an L-shaped cross-sectional profile which is composed of a leg radially inwardly extending from the housing (20) and supporting the bearing (50), and a leg axially extending away from the bearing (50), this latter leg, together with the flange (28), holding clamped therebetween the outer edge of the disc (30).

4. The sensor of any of claims 1 to 3, characterized in that

– the bearing (50) is arranged between the elastic disc (30) and a bottom (22) of the housing (20),

– the at least one switch (56) is affixed to the bottom (22), and

– the housing (20) is connected with its bottom (22) into a holder (10).

5. The sensor of claim 4, characterized in that the at least one switch (56) is adjustable in the direction of the longitudinal axis (40) by means of fine-pitch threads (58).

**Revendications**

1. Palpeur de mesure, comprenant
– un boîtier (20), auquel est fixé un élément d'appui (26) annulaire,
– un porte-pointe (34) qui repose sur l'élément d'appui (26) par l'intermédiaire d'un logement (50), disposé autour d'un axe longitudinal central (40), et est adapté à la fixation d'au moins une pointe (38),
– et un ensemble élastique (30, 54) qui tend à maintenir le porte-pointe (34) dans une position de repos dans laquelle il repose sur l'élément d'appui (26) par le logement (50) tout entier, mais qui, lorsqu'une force extérieure agit sur la pointe (38), permet un mouvement basculant du porte-pointe (34) autour d'un axe transversal qui s'étend transversalement par rapport à la direction de ladite force et de l'axe longitudinal (40), ainsi que la génération d'un signal en fonction du mouvement basculant,

– l'ensemble élastique (30, 54) comportant un disque élastique (30) qui est monté sensiblement perpendiculairement à l'axe longitudinal (40), le porte-pointe (34) étant fixé dans le centre dudit disque, et ledit disque étant fixé, par son bord extérieur, sur l'élément d'appui (26), et

– un interrupteur électrique (56), au moins, étant associé au porte-pointe (34), ledit interrupteur étant séparé du logement (50) et destiné à la génération de signal,
caractérisé en ce que l'élément d'appui (26) est un anneau placé dans le boîtier (20) qui est serré, ensemble avec le bord extérieur du disque élastique (30), entre un épaulement intérieur annulaire (24) du boîtier (20) et une bride (28), fixée au boîtier (20), de telle manière que le disque élastique (30) ferme, en le rendant étanche vers l'extérieur, un espace du boîtier (20) qui, outre le logement (50) et des parties dudit interrupteur (56) ou de chaque interrupteur (56), contient aussi l'élément d'appui (26).

2. Palpeur de mesure suivant la revendication 1, caractérisé en ce que le diamètre de serrage du bord extérieur du disque élastique (30) est supérieur au diamètre du logement (50) du porte-pointe (34).

3. Palpeur de mesure suivant la revendication 2, caractérisé en ce que l'élément d'appui (26) présente, en section droite, un profil en forme de L qui se compose d'une branche s'étendant radialement vers l'intérieur par rapport au boîtier (20) et servant d'appui au logement (50), et d'une branche s'étendant axialement par rapport au logement (50) et qui, conjointement avec la bride (28), maintient serré le bord extérieur du disque (30).

4. Palpeur de mesure suivant l'une quelconque des revendications 1 à 3, caractérisé en ce que
– le logement (50) est monté entre le disque élastique (30) et un fond (22) du boîtier (20),
– l'interrupteur (56), pour le moins, est fixé au fond (22), et
– le boîtier (20) est monté, par l'intermédiaire de son fond (22), dans un élément de fixation (10).

5. Palpeur de mesure suivant la revendication 4, caractérisé en ce que l'interrupteur (56), pour le moins, est réglable dans la direction de l'axe longitudinal (40) au moyen d'un filet à pas fin (58).